# EUROPEAN PATENT SPECIFICATION

(11) **EP 0 696 822 B1**
(45) Date of publication and mention of the grant of the patent: **27.10.1999**
(21) Application number: 95112529.3
(22) Date of filing: 09.08.1995
(51) Int. Cl.: H01M 2/16, H01M 10/34

(54) **Sealed type alkaline battery**
Gasdichte alkalische Batterie
Accumulateur alcalin étanche

(30) Priority: 11.08.1994 JP 21204094
(43) Date of publication of application: 14.02.1996
(73) Proprietor: Japan Storage Battery Company Limited, Minami-ku Kyoto-shi Kyoto (JP)
(72) Inventor: Nakamitsu, Kazuhiro, c/o Japan Storage Battery Co., Minami-ku, Kyoto-shi, Kyoto (JP); Murata, Toshio, c/o Japan Storage Battery Co. Ltd., Minami-ku, Kyoto-shi, Kyoto (JP)
(74) Representative: Grünecker, Kinkeldey, Stockmair & Schwanhäusser Anwaltssozietät

(56) References cited:
- EP-A- 0 316 916
- GB-A- 2 098 636
- US-A- 4 110 143
- US-A- 4 217 404

## Description

### BACKGROUND OF THE INVENTION

### 1. Field of the invention

The present invention relates to a sealed type alkaline battery having a positive electrode, a negative electrode, a separator, an alkaline electrolyte, and a sealed battery vessel.

### 2. Description of the Related Art

In a sealed type alkaline battery, a nickel oxyhydroxide, a manganese dioxide, a silver oxide or the like is used as a positive electrode active material, and a hydride of a hydrogen occlusion alloy, cadmium, zinc, hydrogen, or any combination of the foregoing materials is used as a negative electrode active material. An alkaline electrolyte mainly including a potassium hydroxide is used as an electrolyte. A separator is constituted by a nonwoven fabric having an excellent electrolyte holding property. The foregoing elements are accommodated in an alkaline resistant sealed battery vessel. In the case of using a silver oxide as the positive electrode or in the case of using zinc as the negative electrode, a dendrite of metal silver or zinc grows to thereby easily generate an internal short circuit in the nonwoven fabric separator. In order to prevent the generation, accordingly, a fine-porous membranous separator is used in addition to the nonwoven fabric separator.

Further, in the sealed type alkaline battery, the electrolyte is used not in a large quantity but in a certain quantity sufficient to fill the positive and negative electrodes and a space portion of the separator. When the battery is charged, the positive electrode is full-charged prior to or simultaneously with the negative electrode.

In the thus configured sealed type alkaline battery, when the battery is charged and the positive electrode reaches a full-charged state, an oxygen gas generation reaction which is a competing reaction occurs in the positive electrode. A thin electrolyte film is formed on the surface of a negative electrode plate so that an oxygen gas electrolytic reduction reaction is apt to be caused on the surface of the negative electrode. Therefore, an oxygen gas generated on the positive electrode moves to the negative electrode so that the oxygen gas is subjected to electrolytic reduction to be consumed on the surface of the negative electrode. As a result, not only storage of the oxygen gas in the battery is prevented but also the charge reaction of the negative electrode and the hydrogen generation reaction which is a competitive reaction of the charge reaction are stopped, so that storage of the gas in the battery is prevented even after the battery is full-charged. As a result, the rising of the internal pressure of the battery as well as the consumption of the electrolyte due to electrolysis of water contained therein are suppressed so that charge and discharge can be performed over hundreds of cycles without supplementing the electrolyte.

However, such a sealed type alkaline battery has the following problems.

That is, when the charge and discharge cycle of the battery proceeds, expansion and expression of the active material are repeated so that the electrode plate is successively expanded and the electrolyte in the separator is absorbed into fine pores of the electrode plate. Further, when a hydrogen occlusion alloy or zinc is used for the constituent element of the battery, particularly for the negative electrode, the metal portion is corroded with consumption of water in the electrolyte as the charge and discharge cycle proceeds and the quantity of the electrolyte is reduced correspondingly, because the negative electrode includes a metal component having a reversible potential less than that of the hydrogen in the alkaline electrolyte.

As a result, there is a disadvantage that the quantity of the electrolyte held in the separator decreases to thereby causes so-called solution dry-up in the separator so that the internal resistance of the battery increases extremely. Accordingly, it becomes difficult remarkably to perform charge/discharge of the sealed type alkaline battery.

Then, it has been required to provide a sealed type alkaline battery in which the increase of internal resistance is restrained even when the charge and discharge cycle proceed.

Further, particularly in a sealed type alkaline battery using a nickel oxy-hydroxide as the positive active material and using a hydride of an hydrogen occlusion alloy or cadmium as the negative electrode active material, there is such a problem that the rate of self-discharge is high.

It is known that the main reason of self-discharge in a nickel cadmium battery is in the "nitrate-nitrite shuttle" mechanism due to a nitric acid radical remaining in the positive and negative electrode active materials as an impurity in origin of the raw material salt and due to decomposition products of the polyamide separator. In the case of a nickel-metal hydride battery, therefore, there has been proposed a producing method in which, when a sintered nickel hydroxide electrode is used as a positive electrode, the battery is charged in an open system after assembly of the battery and preserved at 30 to 60°C to thereby remove nitrate ions (Japanese Patent Unexamined Publication No. Hei-4-322071). In this method, however, there has been such a problem that while the battery is charged and left as it is in the open system, an alkaline electrolyte absorbs a carbon dioxide in the air so as to be contaminated or water in the alkaline electrolyte evaporates to thereby change the density or quantity of the electrolyte.

### SUMMARY OF THE INVENTION

It is an object of the present invention to provide a sealed type alkaline battery such as a sealed nickel-metal hydride battery or a sealed nickel-cadmium battery in which self-discharge is remarkably suppressed without contaminating an electrolyte or changing the density and quantity of the electrolyte.

The sealed type alkaline battery according to the present invention is comprised of a positive electrode; a negative electrode; an alkaline electrolyte; a separator comprising a nonwoven fabric including polyolefin fibers having fluorine and at least one of carbonyl group and hydroxyl group on an surface thereof; and a sealed type battery vessel receiving said positive electrode, said negative electrode, said alkaline electrolyte and said separator therein.

According to the present invention, it is possible to obtain a long-life sealed type alkaline battery in which the rising of the internal resistance is restrained even when the charge and discharge cycle proceeds.

It may be considered that the mechanism for obtaining such operation and effects is as follows.

That is, polyolefin has a high durability because of having excellent alkali and oxidation resistances. However, since the surface of polyolefin is poor in hydrophilic property in the state as it is, it is insufficient in holding an alkaline electrolyte. In the separator having a nonwoven fabric including polyolefin fibers having a carbonyl or hydroxyl radical and fluorine on its surface, the functional groups on the surface give a continuous hydrophilic property to the separator with maintaining the durability so that both the durability and alkaline electrolyte holding property are excellent. As a result, the quantity of the electrolyte held in the separator hardly decreases even when the charge and discharge cycle proceeds and the rising of the internal resistance is remarkably restrained.

Further, particularly in a sealed type alkaline battery using a nickel oxy-hydroxide as the positive electrode active material and using a hydride of a hydrogen occlusion alloy or cadmium as the negative electrode active material, the self-discharge characteristic can be improved.

The reason therefor is as follows. Since the base material of the separator is not polyamide but polyolefin, no nitrogen compounds causing the nitrate-nitrite shuttle mechanism are included. Therefore, the self-discharge in the sealed nickel-metal hydride alkaline battery and in the sealed nickel-cadmium alkaline battery can be restrained.

### BRIEF DESCRIPTION OF THE DRAWINGS

In the accompanying drawings;
Fig. 1 shows the wide spectrum of X-ray photoelectron spectrum of a nonwoven fabric mainly including polyolefin fibers each of which has on its surface a carbonyl or hydroxyl radical and a fluorine radical so as to be subject to permanent hydrophilic treatment; and
Fig. 2 shows the division result of C1s spectrum of Fig. 1.

### DETAILED DESCRIPTION OF THE INVENTION

The detailed description of the invention will be described as follows.

### Example

A sealed type alkaline battery A in this example according to the present invention was produced by the following method.

The positive electrode of the battery was produced by the following method. That is, 95 % by weight of positive electrode active material powder mainly including nickel hydroxide prepared by coprecipitating hydroxide of metals of nickel, cobalt, and zinc with weight ratio of 95:2:3, and 5 % by weight of cobalt hydroxide powder were mixed with each other to prepare a mixture. Then, water was added to the mixture and the mixture is further kneaded to thereby prepare a paste. The cobalt hydroxide was used as an additive for improving the utilization of the positive electrode active material and for obtaining a discharge reserve of the negative electrode. The same effect may be obtained also from metal cobalt or cobalt oxide. Next, a foamed nickel porous body having an average pore diameter of about 300 µm is filled with the paste, dried, pressed, and cut to a predetermined size so as to produce a positive electrode.

The negative electrode of the battery was produced by the following method. That is, metal materials including misch metal (hereinafter, referred to as "Mm"; Mm includes about 45 % by weight of La, about 5 % by weight of Ce, about 10 % by weight of Pr, and about 40 % by weight of Nd), Ni, Co, Mn and Al were melted in a high-frequency induction furnace so as to prepare a composition of MmNi_{3.6}Co_{0.7}Al_{0.4}Mn_{0.3} and the melted material was cast in a metal mold and solidified. The thus prepared cast lump was ground and screened to thereby prepare hydrogen occlusion alloy powder having an average particle diameter of about 30 µm. Next, 100 weight part of hydrogen occlusion alloy powder, 2 weight part of carbon black functioning as a conduction assistant were kneaded with an aqueous solution of polyvinyl alcohol having functions of a thickener and a binding agent to thereby prepare a paste. Next, the thus prepared paste was applied onto a nickel-plated perforated steel plate having a thickness of about 80 µm and having an open area ratio of 50%, and then dried, pressed, and cut to a predetermined size to thereby prepare a negative electrode.

The battery was assembled as follows. That is, three positive electrodes and four negative electrodes are laminated one on another through separators therebetween and the whole was accommodated in a nickel-plated iron battery vessel. Next, an alkaline electrolyte prepared by dissolving 10g/l of LiOH into 7mol of KOH aqueous solution was poured into the vessel and the battery was sealed with a cover having a positive electrode terminal acting also as a safety valve so that a rectangular sealed nickel-metal hydride alkaline battery was produced. The size of the battery was 67mm length; 6.4mm width; and 5.6mm thickness. In the battery, it was found that the discharge capacity was about 900mAh when the battery was discharged with a current of 180mA (about 5 hour rate) at 20°C, and the discharge capacity limitation electrode was the positive electrode. The discharge capacity corresponds to the active material utilization rate of 100% on the basis of the theoretical capacity upon assumption that the nickel hydroxide of the positive electrode obeys one-electron reaction. Further, the charge and discharge of the battery is limited by the capacity of the positive electrode.

On the other hand, the following separator was used in the alkaline battery.

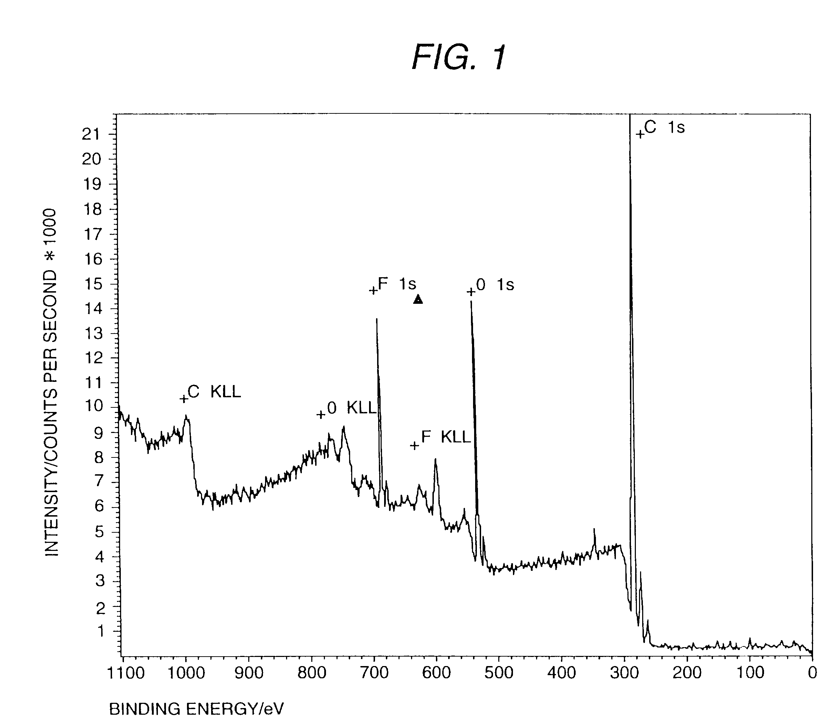

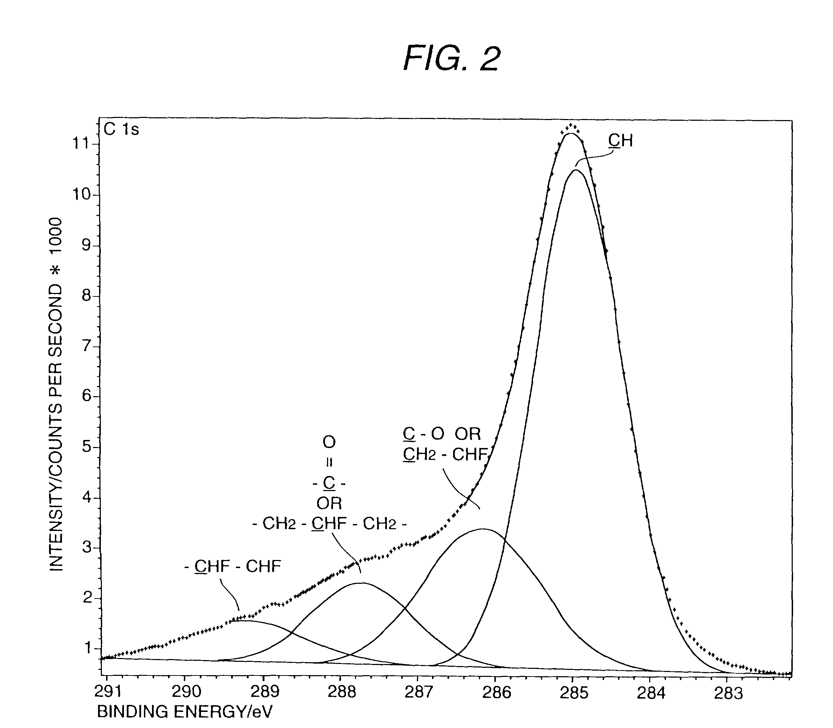

The separator was subject to elementary analysis on its surface and chemical species bonding energy on its surface by an x-ray photoelectron spectral (XPS) method. SHIMADZU/KRATOS AXUS-HSi type was used as the analyzing apparatus. Fig. 1 shows the wide spectrum. Fig. 1 indicates peaks of C, O and F. Therefore, it was understood that C, O and F exist on the surface of the separator. Fig. 2 shows the division result of the C1s peak. The bond energy of C1s of polyolefin takes a specific value in accordance with the chemical bonding state in the vicinity of a C atom. Accordingly, it is possible to specify the chemical bonding state on the surface of the polyolefin by decomposition of the C1s peak. That is, in Fig. 2, the peak in the vicinity of the bond energy of 286eV is attributed to C of CH₂-CHF or of C-O (a carbon atom bonded to a hydroxyl radical), the peak in the vicinity of 288eV is attributed to C of CH₂-CHF-CH₂- or of C = O (a carbon atm of a ketone radical), and the peak in the vicinity of 289eV is attributed to C of -CHF-CHF. Incidentally, "C" in the expression "CH₂-CHF" or the like represents a C atom which generates the C1s of the bond energy, and the expression such as "CH₂-CHF" or the like represents the bonding state of atoms in the vicinity and including the "C".

Accordingly, it was understood that the separator was constituted by a nonwoven fabric mainly including polyolefin fibers having a carbonyl or hydroxyl radical and fluorine on its surface.

Next, the nickel-metal hydride alkaline battery was subject to formation charge with 180mA for 8 hours (20°C), subject to formation discharge (20°C) with 180mA to the terminal voltage of 1.0V, charged again with 180mA for 8 hours (20°C), and then left stand at 40°C for 7 days. The leaving stand was performed for the purpose of restraining reduction of the capacity at the time of large-current discharge of the nickel-metal hydride alkaline battery at a low temperature, and for the purpose of restraining self-discharge of this battery. Then, after the leaving stand, the battery was discharged (20°C) with a current of 180mA to the terminal voltage of 1.0V.

### Comparative Example

A sealed type alkaline battery B as a comparative example was produced in such a manner that a polyamide nonwoven fabric was used as a separator and the other elements were configured in the same manner as the sealed type alkaline battery A.

### Experimentation 1

A charge-discharge cycle test was performed by using the sealed alkaline batteries A and B under such a condition that charge was performed with a current of 900mA at a ambient temperature of 20°C for 66 minutes and discharge was performed with a current of 900mA to a terminal voltage of 1.0V. In the nickel-metal hydride battery, accompanying with the procedure of the charge-discharge cycle, water is consumed due to corrosion of a hydrogen occlusion alloy and the electrolyte is absorbed to the positive electrode. Accordingly, the electrolyte in the separator is dried up so as to increase the internal resistance of the battery. This is the cause of the charge-discharge cycle life of the battery. Then, in the charge-discharge cycle test, the charge-discharge cycle was examined before the internal resistance of the battery reaches 100mΩ (10-20mΩ in the beginning of the charge-discharge cycle).

Further, the self-discharge characteristic was examined by using the sealed alkaline batteries A and B through the following method. That is, the discharge capacity of each of the sealed alkaline batteries A and B was examined in such a manner that charge was performed with a current of 900mA at 20°C for 66 minutes and discharge was performed with a current of 180mA to a terminal voltage of 1.0V at 20°C. Next, the battery was charged with a current of 900mA at 20°C for 66 minutes and left stand in a constant temperature vessel of 40°C for 7 days. Thereafter, discharge was performed with a current of 180mA to a terminal voltage of 1.0V at 20°C and the residual discharge capacity after the leave stand was examined. Then, the capacity holding rate was obtained by dividing the residual discharge capacity after leave stand by the discharge capacity before leave stand.

Table 1 shows the number of charge-discharge cycles before the internal resistance obtained in the test reaches 100mΩ and the capacity holding rate.

**TABLE 1**

| Battery | Capacity Holding Rate after Leaving for 7 Days at 40°C (%) | Number of Charge/Discharge Cycles before Internal Resistance Reaches 100mΩ |
|---|---|---|
| A | 74 | 781 |
| B | 65 | 522 |

According to Table 1, in comparison of the sealed type alkaline battery A according to the present invention with the sealed type alkaline battery B according to the comparative example, it was understood that the charge-discharge cycle life characteristic was remarkably improved such that the number of charge-discharge cycles before the internal resistance reaches 100mΩ was improved to be about 1.5 times and the capacity holding rate was high to thereby effectively restrain the self-discharge.

Further, such an effect that the charge-discharge cycle life could be remarkably prolonged in a sealed type alkaline battery in which the quantity of the electrolyte was reduced could be obtained not only in the nickel-metal hydride battery according to the example but also in the case of using a metal oxide such as a nickel oxy-hydroxide, a manganese dioxide, a silver oxide or the like as the positive electrode active material and using a hydride of a hydrogen occlusion alloy, cadmium, zinc, hydrogen, or any combination of the foregoing materials as the negative electrode active material.

Moreover, the effect of restraint of self-discharge was recognized not only in the nickel-metal hydride battery according to this example but also in the nickel-cadmium battery.

As described above in detail, according to the present invention, a sealed type alkaline battery having a long charge-discharge cycle life can be obtained. Further, when a nickel-metal hydride battery or a nickel-cadmium battery is produced as the sealed type alkaline battery, the self-discharge can be effectively suppressed.

Although detailed description has been made as to the kind of the hydrogen occlusion alloy constituting the negative electrode, the producing method of the alloy powder, the producing method of the negative electrode, the composing and producing methods of the positive electrode materials, the composition of the electrolyte, the configuration of the battery, the shape and size of the battery, the number of formation charge-discharge cycle, and the temperature, time, current and other conditions and configurations of the formation charge-discharge with respect to batteries having specific configurations, the present invention is not limited to the description of this embodiment as described above, and those skilled in the art can perform modifications and changes within the scope of the present invention. Such modifications and changes are included in the scope of the present invention.

## Claims

1. A sealed type alkaline battery comprising:
a positive electrode;
a negative electrode;
an alkaline electrolyte;
a separator comprising a nonwoven fabric including polyolefin fibers having fluorine and at least one of carbonyl group and hydroxyl group on an surface thereof; and
a sealed type battery vessel receiving said positive electrode, said negative electrode, said alkaline electrolyte and said separator therein.

2. A sealed type alkaline battery according to claim 1, wherein said polyolefin fibers has carbonyl group on the surface thereof.

3. A sealed type alkaline battery according to claim 1, wherein said polyolefin fibers has hydroxyl group and fluorine on the surface thereof.

4. A sealed type alkaline battery according to claim 1, wherein said positive electrode having a positive active material comprising at least one of nickel hydroxide, nickel oxy-hydroxide, manganese dioxide and silver oxide.

5. A sealed type alkaline battery according to claim 4, wherein said negative electrode having a negative active material comprising Ni, Co, Mn, Al and a Misch metal including La, Ce, Pr and Nd.

6. A sealed type alkaline battery according to claim 4, wherein said negative electrode having a negative active material comprising at least one of a hydride of a hydrogen occlusion alloy, cadmium, zinc, hydrogen.

7. A sealed type alkaline battery according to claim 1, wherein said battery is a nickel-metal hydride battery.

8. A sealed type alkaline battery according to claim 1, wherein said battery is a nickel-cadmium battery.

## Patentansprüche

1. Gasdichte Alkali-Batterie, umfassend:
eine positive Elektrode,
eine negative Elektrode,
einen alkalischen Elektrolyten,
ein Trennelement, umfassend ein Vlies mit Polyolefin-Fasern, wobei die Fasern Fluorgruppen und Carbonylgruppen und/oder Hydroxylgruppen umfassen, die sich an der Oberfläche der Fasern befinden, und
ein gasdichtes Batteriegehäuse, welches die positive Elektrode, die negative Elektrode, den alkalischen Elektrolyten und das Trennelement umschließt.

2. Gasdichte Alkali-Batterie nach Anspruch 1, wobei die Polyolefin-Fasern Carbonylgruppen umfassen, die sich an der Oberfläche der Fasern befinden.

3. Gasdichte Alkali-Batterie nach Anspruch 1, wobei die Polyolefin-Fasern Hydroxylgruppen und Fluorgruppen umfassen, die sich an der Oberfläche der Fasern befinden.

4. Gasdichte Alkali-Batterie nach Anspruch 1, wobei die positive Elektrode ein positives aktives Material umfaßt, das mindestens einen Bestandteil enthält, ausgewählt aus Nickelhydroxid, Nickeloxidhydroxid, Mangandioxid und Silberoxid.

5. Gasdichte Alkali-Batterie nach Anspruch 4, wobei die negative Elektrode ein negatives aktives Material umfaßt, das Ni, Co, Mn, Al und ein Mischmetall, umfassend La, Ce, Pr und Nd, enthält.

6. Gasdichte Alkali-Batterie nach Anspruch 4, wobei die negative Elektrode ein negatives aktives Material umfaßt, das mindestens einen Bestandteil enthält, ausgewählt aus einem Hydrid einer Wasserstoff-Okklusionslegierung, Cadmium, Zink und Wasserstoff.

7. Gasdichte Alkali-Batterie nach Anspruch 1, wobei die Battene eine Nickel-Metallhydrid-Batterie ist.

8. Gasdichte Alkali-Batterie nach Anspruch 1, wobei die Batterie eine Nickel-Cadmium-Batterie ist.

## Revendications

1. Accumulateur alcalin de type étanche comprenant :
une électrode positive;
une électrode négative;
un électrolyte alcalin;
un séparateur comprenant un non-tissé contenant des fibres de polyoléfine présentant du fluor et au moins un groupe parmi un groupe carbonyle et un groupe hydroxyle sur une surface de celui-ci; et
un bac d'accumulateur de type étanche recevant ladite électrode positive, ladite électrode négative, ledit électrolyte alcalin et ledit séparateur dans celui-ci.

2. Accumulateur alcalin de type étanche selon la revendication 1, dans lequel lesdites fibres de polyoléfine présentent un groupe carbonyle sur la surface de celles-ci.

3. Accumulateur alcalin de type étanche selon la revendication 1, dans lequel lesdites fibres de polyoléfine présentent un groupe hydroxyle et du fluor sur la surface de celles-ci.

4. Accumulateur alcalin de type étanche selon la revendication 1, dans lequel ladite électrode positive présente une matière active positive comprenant au moins un composé parmi l'hydroxyde de nickel, l'oxy-hydroxyde de nickel, le dioxyde de manganèse et l'oxyde d'argent.

5. Accumulateur alcalin de type étanche selon la revendication 4, dans lequel ladite électrode négative présente une matière active négative comprenant Ni, Co, Mn, Al et un Misch métal comprenant La, Ce, Pr et Nd.

6. Accumulateur alcalin de type étanche selon la revendication 4, dans lequel ladite électrode négative présente une matière active négative comprenant au moins un composé parmi un hydrure d'un alliage à occlusion d'hydrogène. le cadmium, le zinc, l'hydrogène.

7. Accumulateur alcalin de type étanche selon la revendication 1, dans lequel ledit accumulateur est un accumulateur au nickel-hydrure métallique.

8. Accumulateur alcalin de type étanche selon la revendication 1, dans lequel ledit accumulateur est un accumulateur au nickel-cadmium.
